# EUROPÄISCHE PATENTSCHRIFT

(11) **EP 3 440 762 B1**
(45) Veröffentlichungstag und Bekanntmachung des Hinweises auf die Patenterteilung: **20.11.2019**
(21) Anmeldenummer: 17715441.6
(22) Anmeldetag: 31.03.2017
(51) Int. Cl.: H02K 1/24, H02K 15/02, H02K 19/10, B22F 3/105

(54) **LÄUFER FÜR EINE RELUKTANZMASCHINE**
ROTOR FOR A RELUCTANCE MACHINE
ROTOR POUR UNE MACHINE A RELUCTANCE

(30) Priorität: 07.06.2016 EP 16173304
(43) Veröffentlichungstag der Anmeldung: 13.02.2019
(73) Patentinhaber: Siemens Aktiengesellschaft, 80333 München (DE)
(72) Erfinder: BITTNER, Roland, 91522 Ansbach (DE); HÖSLE, Markus, 91058 Erlangen (DE)
(86) Internationale Anmeldenummer: PCT/EP2017/057647
(87) Internationale Veröffentlichungsnummer: WO 2017/211477

(56) Entgegenhaltungen:
- EP-A1- 2 768 117
- WO-A1-2013/179017
- WO-A2-2014/166674

## Beschreibung

Die Erfindung betrifft einen Läufer für eine Reluktanzmaschine sowie ein Herstellungsverfahren hierfür.

Bei Reluktanzmaschinen wird bekanntermaßen von einem Ständer (Stator) ein magnetisches Wechselfeld erzeugt, durch welches ein Läufer (Rotor) im Wesentlichen infolge der Reluktanzkraft angetrieben wird. Sowohl der Läufer als auch der Ständer weisen hierbei üblicherweise Pakete aus axial geschichteten Blechen auf, die voneinander durch einseitige Lackschichten isoliert sind. Die Bleche bestehen aus Material mit hoher magnetischer Permeabilität, z.B. Elektroblech. Jedes Blech ist in sich strukturiert und weist eine Anzahl von Aussparungen auf, die dazu dienen, den Verlauf des Magnetfelds zu beeinflussen. Die Aussparungen kann man als nicht-flussführende oder nicht-magnetflussleitende Bereiche ansprechen, während die Bleche flussführende oder magnetflussleitende Bereiche darstellen. Herstellungstechnisch werden die jeweiligen Bleche gestanzt. Der Läufer weist in der Regel vier oder acht Pole auf. Diese und andere Fertigungseinschränkungen ergeben sich u.a. aus der Notwendigkeit, die Bleche zu stanzen. Das Blechpaket kann insgesamt axial verschweißt werden. Unter Umständen kann der Läufer auch einen Kurzschlusskäfig aufweisen.

Während die Verwendung gestanzter Bleche eine bewährte und relativ kostengünstige Herstellung des Läufers ermöglicht, ist die Maschine hierdurch sehr schwer. Dies hängt vor allen Dingen damit zusammen, dass der Läufer neben elektromagnetischen Eigenschaften auch bestimmte mechanische Eigenschaften aufweisen muss. So können Teile des Läufers drehzahlabhängig erheblichen Fliehkräften ausgesetzt sein. Da man somit bei den gestanzten Blechen auch immer die strukturelle Integrität des Läufers zu beachten hat, müssen die flussführenden Bereiche und die nicht flussführenden Bereich eine Mindestgröße haben. Zur Verbesserung der Stabilisierung ist es oft auch nötig, (z.B. radial verlaufende) Stege zwischen den flussführenden Bereichen zu belassen. Dies führt allerdings zu unerwünschten Streuflüssen, die die Effektivität der Maschine reduzieren.

Relevanter Stand der Technik ist in WO 2014/166674 A2, EP 2 768 117 A1 und WO 2013/179017 A1 offenbart.

Vor diesem Hintergrund besteht die Aufgabe der Erfindung darin, das Gewicht und die Effizienz einer Reluktanzmaschine, insbesondere einer synchronen Reluktanzmaschine, zu verbessern. Die Aufgabe wird gelöst durch einen Läufer nach Anspruch 1 sowie durch ein Herstellungsverfahren nach Anspruch 8.

Durch die Erfindung wird ein Läufer für eine Reluktanzmaschine zur Verfügung gestellt, mit in axialer Richtung abwechselnd angeordneten Leiterschichten und Isolationsschichten. Die Leiterschichten und Isolationsschichten können sich einander abwechseln, d.h. zwischen zwei Leiterschichten ist jeweils eine Isolationsschicht angeordnet. Hierbei sind die einzelnen Schichten entlang der axialen Richtung, die der Drehachse des Läufers entspricht, angeordnet. Bevorzugt sind die Schichten eben und erstrecken sich senkrecht zur axialen Richtung. Es ist anzumerken, dass es beim abwechselnden Anordnen der Leiter- und Isolationsschichten auch dazu kommen kann, dass zwei oder mehrere Leiterschichten aneinandergereiht sind ohne dass sich eine Isolationsschicht dazwischen befindet.

Die Leiterschichten weisen magnetflussleitende Leiterbereiche auf. "Magnetflussleitend" bezeichnet hier und im Folgenden eine hohe magnetische Permeabilität µr, die wenigstens 10, bevorzugt wenigstens 100 beträgt. Ggf. kann die Permeabilität auch in der Größenordnung 103 bis 105 liegen. Hierbei können insbesondere weichmagnetische bzw. ferromagnetische magnetflussleitende Materialien eingesetzt werden. Die Leiterschichten weisen weiterhin nicht magnetflussleitende Isolationsbereiche auf. Die Isolationsbereiche können wenigstens teilweise durch Ausnehmungen gebildet sein, die im Betrieb typischerweise mit Luft gefüllt sind.

Die Isolationsschichten sind elektrisch isolierend, d.h. sie bestehen aus einem oder mehreren Materialien, die als elektrische Isolatoren bzw. Nichtleiter einzustufen sind, also z.B. eine elektrische Leitfähigkeit von 10-8 S/m oder weniger haben. Bevorzugt sind sie außerdem nicht-magnetflussleitend, d.h. sie weisen durchgängig eine geringe magnetische Permeabilität auf. "Nicht-magnetflussleitend" bezeichnet hier und im Folgenden eine geringe magnetische Permeabilität, die bspw. unter 5 oder unter 2 betragen kann. Oftmals liegt die Permeabilität im Bereich von 1.

Erfindungsgemäß ist der Läufer wenigstens teilweise durch additive Fertigung hergestellt. Der Begriff "additive Fertigung" (Additive Manufacturing; AM) oder auch "generative Fertigung" dient hierbei als Sammelbegriff für Fertigungsverfahren, bei denen eine dreidimensionale Form sukzessive entweder aus einer formlosen Masse wie einer Flüssigkeit oder einem Pulver oder ggf. aus einem formneutralen Material wie einem Band oder einem Draht aufgebaut wird. Man kann diese Fertigungsverfahren wenigstens teilweise auch als dreidimensionale Druckverfahren bezeichnen. Es können hierbei verschiedenste Verfahren zum Einsatz kommen, ggf. auch in Kombination. Es können u.a. Pulverbettverfahren zum Einsatz kommen, wie selektives Lasersintern (Selektive Laser Sintering; SLS), selektives Laserschmelzen (Selektive Laser Melting; SLM) oder Elektronenstrahlschmelzen (Electron Beam Melting; EBM). Daneben sind aber auch Freiraumverfahren wie Fused Deposition Molding (FDM) oder Kaltgasspritzen (Gas Dynamic Cold Spray; CDCS) möglich oder Flüssigmaterialverfahren wie Liquid Composite Moulding (LCM). Die obige Aufzählung ist beispielhaft nicht erschöpfend oder in irgendeiner Weise einschränkend auszulegen.

Es ist ausdrücklich möglich, unterschiedliche additive Fertigungsverfahren miteinander zu kombinieren. Auch können bspw. bei Einsatz eines Fertigungsverfahrens unterschiedlich große Düsen oder dergleichen verwendet werden, um Strukturen unterschiedlicher Größe effizient herzustellen.

Durch die Verwendung derartiger additiver Fertigungsverfahren ist es zum einen möglich, nahezu beliebige dreidimensionale Formen herzustellen, die sich mit herkömmlichen Umform-, Trenn- und Fügeverfahren nicht oder nur mit unverhältnismäßig großem Aufwand herstellen lassen. Insbesondere bestehen hinsichtlich der Größe der erzeugten Strukturen kaum Beschränkungen. Diese sind allenfalls durch den Durchmesser eines Laserstrahls oder Elektronenstrahls, der zum Schmelzen verwendet wird, oder den Durchmesser eines von einer Düse abgegebenen Partikelstroms vorgegeben. Auch lassen sich auf diese Weise magnetflussleitende und nicht-magnetflussleitende Materialien (ggf. unter Verwendung einer Zwischenschicht) in nahezu beliebiger Weise aneinanderfügen. Da die prozesstechnischen Beschränkungen des Stanzverfahrens wegfallen, lässt sich das Gewicht des Läufers deutlich reduzieren. Insbesondere können auch, wie nachfolgend noch erläutert wird, Strukturen, die im Stand der Technik vergleichsweise schwer aus Elektroblech gebildet werden, aus isolierenden und vergleichsweise leichten Materialen gebildet werden. Neben dem Gewichtsvorteil, der selbstverständlich bei einem Läufer aufgrund des geringeren Trägheitsmoments auch die Effizienz der Reluktanzmaschine erhöht, können durch den gezielten Einsatz von isolierenden Materialien bzw. das Weglassen oder Ausdünnen bestimmter Strukturen aus leitenden Material Streuflüsse reduziert werden, was sich wiederum positiv auf die Effizienz auswirkt.

Während Blechpakete im Stand der Technik normalerweise verschweißt oder geklammert werden müssen, um den notwendigen Zusammenhalt zu gewährleisten, kann bei dem erfindungsgemäßen Läufer hierauf ggf. verzichtet werden, da dessen Teile im Zuge der additiven Fertigung bereits stoffschlüssig und/oder formschlüssig miteinander verbunden werden können. Es ist allerdings auch möglich, gewissermaßen ergänzend hierzu eine weitere Verbindung durch Verschweißen, Klammern oder dergleichen vorzusehen.

In der Regel bestehen die leitenden Schichten nicht durchgehend aus magnetflussleitenden Material. Erfindungsgemäß weist wenigstens eine Leiterschicht wenigstens einen nicht-magnetflussleitenden Isolationsbereich auf, der wenigstens teilweise zwischen Leiterbereichen angeordnet ist. Ein solcher Isolationsbereich kann zudem elektrisch isolierend sein. Insbesondere kann eine Leiterschicht mehrere Isolationsbereiche aufweisen, die jeweils wenigstens teilweise zwischen Leiterbereichen angeordnet sind. Die Funktion der Isolationsbereiche besteht darin, die Ausbildung des Magnetflusses innerhalb der Leiterschichten zu beeinflussen. Auch die Isolationsbereiche können wenigstens teilweise durch Ausnehmungen gebildet sein, die im Betriebszustand luftgefüllt sind. Bevorzugt sind die Leiterschichten und Isolationsschichten axial aufeinanderfolgend angeordnet und die Isolationsbereiche und Leiterbereiche innerhalb einer Leiterschicht radial und/oder tangential aufeinanderfolgend angeordnet.

Wenigstens ein Isolationsbereich weist einen durch additive Fertigung hergestellten Schicht-Isoliersteg aus nicht-magnetflussleitendem Material auf, der zwei Leiterbereiche verbindet.

Bevorzugt ist ein solcher Schicht-Isoliersteg auch elektrisch isolierend. Die Bezeichnung "Schicht-Isoliersteg" bedeutet hierbei, dass dieser sich innerhalb einer Leiterschicht zwischen zwei Leiterbereichen erstreckt. Der Schicht-Isoliersteg wird durch ein additives Fertigungsverfahren erzeugt, was hinsichtlich seiner Abmessungen und Geometrie unterschiedlichste Möglichkeiten eröffnet. Selbstverständlich können auch mehrere Schicht-Isolierstege zwischen zwei Leiterbereichen angeordnet sein und diese verbinden. Jeder Isoliersteg verbindet die angrenzenden Leiterbereiche mechanisch und verbessert somit die mechanische Stabilität des Läufers. Gleichzeitig führt ein solcher aus nicht-magnetflussleitendem Material gefertigter Steg zu keinen unerwünschten Streuflüssen, wie dies bei aus Blech gebildeten Verbindungsstegen im Stand der Technik der Fall ist. Außerdem zeichnen sich viele nicht-magnetflussleitende Materialien durch eine geringere Dichte aus als z.B. Elektroblech, so dass das Gewicht sowie das Trägheitsmoment des Läufers gegenüber dem Stand der Technik reduziert werden kann. Dies wird auch dadurch begünstigt, dass der Steg fertigungsbedingt nicht dicker ausgeführt sein muss als für die mechanische Stabilität unbedingt notwendig.

Hinsichtlich der Geometrie bestehen wie bereits erwähnt unterschiedlichste Gestaltungsmöglichkeiten. So kann bspw. ein Schicht-Isoliersteg senkrecht oder schräg zur Verlaufsrichtung der angrenzenden Leiterbereiche verlaufen. Verlaufen die angrenzenden Leiterbereiche bspw. tangential, so kann der Isoliersteg radial oder auch schräg zur radialen sowie zur tangentialen Richtung verlaufen. Es ist darüber hinaus möglich, dass ein Schicht-Isoliersteg einen veränderlichen Querschnitt aufweist. Bspw. kann er in den Verbindungsbereichen zu den Leiterbereichen einen größeren Querschnitt aufweisen, um eine bessere Anbindung zu ermöglichen, während er in einem dazwischenliegenden Mittelabschnitt einen geringeren Querschnitt aufweist. Der Isoliersteg kann auch gebogen und/oder abgewinkelt sein. Weiterhin kann der Isoliersteg in sich durchbrochen sein oder es können sich zwei Isolierstege schneiden, z.B. X-förmig oder V-förmig. Die Erstreckung eines Schicht-Isolierstegs quer zur Verlaufsrichtung der Leiterschicht kann gleich derjenigen der Leiterbereiche sein, die er verbindet, aber auch größer oder kleiner.

Da es mit der additiven Fertigung möglich ist, Leiterbereiche und Isolationsbereiche in weitgehend beliebiger Geometrie aneinander zu fügen, kann insbesondere auf jegliche direkte Verbindung zwischen Leiterbereichen verzichtet werden. Somit sind vorteilhaft zwei Leiterbereiche durch einen dazwischen liegenden Isolationsbereich vollständig getrennt. Dies kann insbesondere für die Mehrzahl der Leiterbereiche gelten oder sogar für alle Leiterbereiche. Mechanisch sind zwei solcher Leiterbereiche jeweils durch nicht-magnetflussleitendes Material, bspw. in Form eines oder mehrerer Schicht-Isolierstege, miteinander verbunden.

Während bei einem Läufer im Stand der Technik, der aus axial übereinandergeschichteten Blechen mit zwischen geordneten Lackschichten aufgebaut ist, die Bleche einerseits sowie die Lackschichten andererseits normalerweise jeweils untereinander gleich dick ausgeführt sind, können die Schichtdicken beim erfindungsgemäßen Läufer nahezu beliebig variiert werden. Somit kann der Läufer Leiterschichten und/oder Isolationsschichten mit wenigstens abschnittsweise unterschiedlicher axialer Ausdehnung aufweisen. D.h., wenigstens zwei Leiterschichten können wenigstens abschnittsweise eine unterschiedliche axialer Ausdehnung aufweisen, also unterschiedlich dick sein. Dies schließt die Möglichkeit ein, dass sich die axiale Ausdehnung wenigstens einer Leiterschicht abschnittsweise ändert. Entsprechend können wenigstens zwei Isolationsschichten wenigstens abschnittsweise eine unterschiedliche axiale Ausdehnung aufweisen. Eine solche Variation der Schichtdicke kann bspw. aus mechanischen Gründen erfolgen oder um die Ausbildung des Magnetflusses zu beeinflussen.

Gemäß einer Ausgestaltung weist eine Isolationsschicht wenigstens einen durch additive Fertigung hergestellten Zwischen-Isoliersteg aus elektrisch isolierendem Material auf, der zwei Leiterschichten verbindet. Ein solcher Zwischen-Isoliersteg erstreckt sich zwischen zwei Leiterschichten, also in axialer Richtung. Hierbei ist es durchaus möglich, dass eine Ausdehnung des genannten Isolierstegs in Verlaufsrichtung der Leiterschichten größer ist als seine Ausdehnung quer zu deren Verlaufsrichtung (dass der Steg also dicker ist als lang). Die Funktion eines solchen Zwischen-Isolierstegs besteht in der mechanischen Verbindung der genannten zwei Leiterschichten, wobei auch ein vorgesehener Abstand der beiden Leiterschichten eingehalten werden soll. Gleichzeitig sollen die Leiterschichten zumindest im Bereich des Luftspaltes der Reluktanzmaschine elektrisch voneinander isoliert sein, um Wirbelströme zu reduzieren. Bevorzugt ist ein solcher Zwischen-Isoliersteg außerdem nicht-magnetflussleitend. Während im Stand der Technik eine ähnliche Funktion normalerweise durch zwischen den Blechen vorhandene Lackschichten erfüllt wird, die sich über die gesamte Fläche des Blechs erstrecken, können durch die additive Fertigung ein oder mehrere Zwischen-Isolierstege so materialsparend hergestellt werden, dass dies für die mechanische Verbindung der angrenzenden Leiterschichten ausreichend ist, gleichzeitig aber das Gewicht und somit das Trägheitsmoment des Läufers möglichst gering gehalten werden.

Optional kann sich ein Zwischen-Isoliersteg von einer Leiterschicht wenigstens bis zur übernächsten Leiterschicht erstrecken. Normalerweise, aber nicht zwangsläufig, ist ein solcher Isoliersteg auch mit der dazwischenliegenden, also benachbarten Leiterschicht verbunden. Es ist hierbei möglich, dass drei oder mehr Leiterschichten, ggf. sogar sämtliche Leiterschichten des Läufers, durch einen solchen Isoliersteg miteinander verbunden sind. Selbstverständlich können mehrere derartig durchgehend ausgebildete Isolierstege vorhanden sein. Auch hier bestehen aufgrund der hohen Flexibilität der additiven Fertigungsverfahren kaum Einschränkungen.

Grundsätzlich kann die Isolierung der Leiterbereiche gegeneinander ebenso wie die Isolierung der Leiterschichten gegeneinander ausschließlich durch additiv gefertigte Zwischen-Isolierstege bzw. Schicht-Isolierstege (sowie durch Luft) erfolgen. Es ist allerdings auch möglich, dass ergänzend oder alternativ ein Isolierlack in flüssiger Form aufgebracht wird, der anschließend aushärtet. Ein solcher Isolierlack kann bspw. zwischen zwei additiven Fertigungsschritten aufgebracht werden oder aber im Anschluss an die gesamte additive Fertigung.

Auch die Geometrie der Zwischen-Isolierstege kann weitgehend variiert werden. So kann bspw. ein Zwischen-Isoliersteg senkrecht oder schräg zur Verlaufsrichtung der Leiterschichten verlaufen. Auch kann ein Zwischen-Isoliersteg einen veränderlichen Querschnitt aufweisen. Bspw. kann er in den Verbindungsbereichen zu den Leiterschichten einen größeren Querschnitt aufweisen, um eine bessere Anbindung zu ermöglichen, während er in einem dazwischenliegenden Mittelabschnitt einen geringeren Querschnitt aufweist. Der Isoliersteg kann auch gebogen und/oder abgewinkelt sein. Weiterhin kann der Isoliersteg in sich durchbrochen sein oder es können sich zwei Isolierstege schneiden, z.B. X-förmig oder V-förmig. U.a. lässt sich durch die Geometrie der Zwischen-Isolierstege sowie der Schicht-Isolierstege auch das mechanische Schwingungsverhalten des Läufers beeinflussen, so das ggf. unerwünschte Geräuschentwicklung unterbunden werden können.

Wenngleich hier Zwischen-Isolierstege und Schicht-Isolierstege begrifflich unterschieden werden, ist es möglich, dass ein Zwischen-Isoliersteg und ein Schicht-Isoliersteg ineinander übergehen bzw. dass ein Isoliersteg sowohl als Zwischen-Isoliersteg als auch Schicht-Isoliersteg angesehen werden kann.

Der Läufer kann wenigstens zwei unterschiedliche magnetflussleitende Materialien aufweisen. Insbesondere ist damit gemeint, dass die unterschiedlichen Materialien räumlich getrennt sind, also nicht miteinander vermengt. Die genannten Materialien können innerhalb einer Leiterschicht kombiniert werden, ggf. sogar innerhalb eines Leiterbereichs. Diese Option, die bei einer Fertigung aus Blechen praktisch ausgeschlossen ist, lässt sich durch additive Fertigung ohne Weiteres realisieren, indem nacheinander, z.B. schicht- oder streifenweise, die unterschiedlichen Materialien aufgebracht werden. Daneben können aber auch unterschiedliche Materialien in unterschiedlichen Leiterschichten eingesetzt werden. Die unterschiedlichen Materialien können sich beispielsweise in ihrer Permeabilität unterscheiden, wodurch die Ausbildung des magnetischen Flusses beeinflussbar ist, oder in ihrer Dichte oder Steifigkeit, wodurch sich die mechanischen Eigenschaften beeinflussen lassen. Sowohl die Wahl des Materials als auch die axiale Dicke einer Leiter- oder Isolationsschicht kann auch damit zusammenhängen, ob an der jeweiligen Stelle Wirbelströme verstärkt auftreten. Ist dies nicht der Fall, kann bspw. ein billigeres Material in Kombination mit einer größeren axialen Schichtdicke verwendet werden.

Es lassen sich nicht nur feste magnetflussleitende Materialien einsetzen, sondern bspw. auch Ferrofluide. Gemäß einer Ausgestaltung weist wenigstens eine Leiterschicht wenigstens einen Hohlraum auf, der ein Ferrofluid enthält. Es kann sich hierbei um eine Mehrzahl von Poren handeln, in denen das Ferrofluid aufgenommen ist. Im Herstellungsverfahren kann die Wandung des Hohlraums auch in einem additiven Fertigungsverfahren hergestellt werden, wobei das Ferrofluid in den Hohlraum eingebracht wird, bevor dieser verschlossen wird. Bei dem das Ferrofluid umgebenden Material kann es sich seinerseits z.B. um ein ferromagnetisches Material handeln. Es ist möglich, dass ein solches Ferrofluid in einem Leiterbereich verwendet wird, während in einem anderen Leiterbereich der gleichen Leiterschicht ein festes leitfähiges Material eingesetzt wird. Alternativ können auch in einer gesamten Leiterschicht alle Leiterbereiche ein Ferrofluid enthalten.

Gemäß einer Ausgestaltung weist wenigstens eine Leiterschicht ein magnetisch anisotropes Material auf. Ein derartiges Material weist eine Vorzugsrichtung für die Magnetisierung auf, was dazu genutzt werden kann, den magnetischen Widerstand in bestimmten Teilen des Läufers richtungsabhängig einzustellen. Hierzu kann bspw. ein magnetisch anisotropes Material beim Aufbringen im Zuge des additiven Fertigungsprozesses durch ein Magnetfeld, das bspw. in der Nähe einer Düse oder ähnlichen Vorrichtung ausgebildet sein kann, gewissermaßen ausgerichtet werden, so dass diese Ausrichtung nach dem Abschluss des Fertigungsprozesses erhalten bleibt.

Auch hinsichtlich der nicht-magnetflussleitenden bzw. elektrisch isolierenden Materialien bestehen unterschiedlichste Möglichkeiten. So kann der Läufer wenigstens zwei unterschiedliche nicht-magnetflussleitende Materialien und/oder zwei unterschiedliche elektrische isolierende Materialien aufweisen. Die Wahl des jeweiligen Materials kann bspw. von der notwendigen mechanischen Stabilität in dem jeweiligen Bereich abhängen. So muss im Hinblick auf auftretende Fliehkräfte bei hohen Drehzahlen eventuell in einem radial äußeren Bereich ein stabileres Material eingesetzt werden, während in einem inneren Bereich zur Gewichtsreduzierung ein weniger stabiles Material verwendet werden kann. Es kann auch bereichsweise einen bestimmtes Material gewählt werden, durch das ein Wärmetransport zum Luftspalt der Reluktanzmaschine, zu den Stirnseiten des Läufers und/oder zur Welle optimiert wird. Auch lassen sich durch die Wahl des Materials unerwünschte Schwingungen innerhalb des Läufers unterdrücken.

Die Oberfläche des Läufers kann insbesondere bei zu erwartenden hohen Drehzahlen daran angepasst sein, möglichst keinen hörbaren Luftschall zu erzeugen. Dies kann entweder durch eine möglichst glatte Oberflächengestaltung oder durch eine geeignete Profilierung der Oberfläche erreicht werden. Insoweit als es hierzu notwendig ist, Isolierstege in einem radial außen liegenden Bereich anzuordnen, kann ggf. durch deren Dicke oder deren Material für eine ausreichende Stabilität gesorgt werden.

Die Welle des Läufers kann separat vom magnetflussleitenden Element desselben gefertigt werden, wobei verschiedene Fertigungsverfahren zum Einsatz kommen können. Bspw. kann sie durch Strangpressen hergestellt werden, wobei ein Hohlprofil der Welle erzeugt wird. Die Welle kann wenigstens teilweise aus geschäumtem Metall bestehen, wodurch sich ihr Gewicht und ihr Trägheitsmoment ebenfalls reduzieren lassen. Bevorzugt ist eine Welle des Läufers durch additive Fertigung hergestellt. Sie kann hierbei im Zuge des additiven Fertigungsprozesses vor, während oder nach den Leiterschichten und Isolationsschichten des Läufers erstellt werden, so dass diese direkt an der Welle aufgebaut werden bzw. umgekehrt und somit einen Stoffschluss hergestellt wird. Im Zuge eines solchen additiven Fertigungsverfahrens lassen sich selbstverständlich auch Hohlräume unterschiedlichster Art erzeugen, die durch Stege oder Kammerwände voneinander getrennt sind.

Ein erfindungsgemäßer Läufer kann auch einen KurzschlussKäfig bzw. Dämpferkäfig aufweisen. Dieser dient zum einen dem asynchronen Anlauf, zum anderen aber auch der mechanischen Dämpfung etwaiger Schwingungen des Läufers. Teile des Käfigs können vorgefertigt sein und beim additiven Fertigungsprozess vorpositioniert werden, so dass die additive Fertigung gewissermaßen "um diese herum" erfolgt. Alternativ kann der Käfig selber mit den anderen Teilen des Läufers durch additive Fertigung hergestellt werden. Schließlich ist es möglich, den Käfig nachträglich im Läufer vorzusehen.

Um einen effizienten Wärmeabtransport zu ermöglichen, kann der Läufer auch wenigstens eine Lüftungsöffnung aufweisen. An eine derartige Lüftungsöffnung schließt sich ein Lüftungskanal an, der von der Oberfläche ins Innere des Läufers führt. Während es bei einem Paketaufbau gemäß dem Stand der Technik schwierig ist, überhaupt derartige Lüftungskanäle vorzusehen und insbesondere deren Verlauf starken Beschränkung unterliegt, kann bei einer additiven Fertigung nahezu jede beliebige Geometrie eines Lüftungskanal sowie einer Lüftungsöffnung realisiert werden. Der Lüftungskanal kann abschnittsweise durch Leiterbereiche und/oder Isolationsbereiche verlaufen.

Durch die Erfindung wird des Weiteren ein Herstellungsverfahren für einen Läufer einer Reluktanzmaschine zur Verfügung gestellt. Der Läufer weist in axialer Richtung abwechselnd angeordnete Leiterschichten und Isolationsschichten auf, wobei die Leiterschichten magnetflussleitende Leiterbereiche umfassen und die Isolationsschichten elektrisch isolierend sind. Erfindungsgemäß wird der Läufer wenigstens teilweise durch additive Fertigung hergestellt. Die genannten Begriffe wurden mit Bezug auf den erfindungsgemäßen Läufer bereits erläutert. Vorteilhafte Ausgestaltungen des erfindungsgemäßen Verfahrens entsprechen den oben genannten Ausgestaltungen des erfindungsgemäßen Läufers.

Der Aufbauprozess des Läufers bzw. derjenigen Teile desselben, die in additive Fertigung hergestellt werden, kann in unterschiedlichster Weise erfolgen. So können z.B. nacheinander die einzelnen Ebenen, die sich in radialer und tangentialer Richtung erstrecken, aufgebaut werden. Das heißt, es wird zunächst eine Ebene fertiggestellt und danach schreitet der Aufbau in axialer Richtung mit der sich dort anschließenden nächsten Ebene fort. Der Aufbau einer einzelnen Ebene kann hierbei radial von innen nach außen erfolgen oder z.B. indem die Ebene zeilenweise gemäß einem kartesischen Koordinatensystem erstellt wird. Alternativ könnte bspw. auch einen Aufbau radial von innen nach außen erfolgen, bei dem zunächst der radial innen liegende Teil entlang der gesamten axialen Ausdehnung des Läufers aufgebaut wird. Als nächstes würde dann die sich radial außen anschließende Schicht aufgebaut usw. Die Fertigung der Ablauf der Fertigung ist somit grundsätzlich unabhängig vom Verlauf der Leiterschichten und Isolationsschichten.

Weitere Einzelheiten und Vorteile der Erfindung können der nachfolgenden, ausführlichen Beschreibung von möglichen Ausführungsformen der Erfindung anhand der beiliegenden Figuren entnommen werden. Hierbei zeigt:
- Fig. 1: eine schematisierte Schnittdarstellung einer Reluktanzmaschine mit einem Läufer gemäß einer ersten Ausführungsform der Erfindung;
- Fig. 2: eine Schnittdarstellung eines Läufers der Reluktanzmaschine aus Fig. 1;
- Fig. 2A: eine vergrößerte Detaildarstellung von Fig. 2;
- Fig. 3: eine weitere Längsschnittdarstellung des Läufers aus Fig. 2;
- Fig. 4: eine Schnittdarstellung eines Läufers sowie eines Ständers gemäß einer zweiten Ausführungsform;
- Fig. 5: eine Schnittdarstellung eines Läufers gemäß einer dritten Ausführungsform;
- Fig. 5A: eine vergrößerte Detaildarstellung von Fig. 5; sowie
- Fig. 6: eine Schnittdarstellung eines Läufers gemäß einer vierten Ausführungsform.

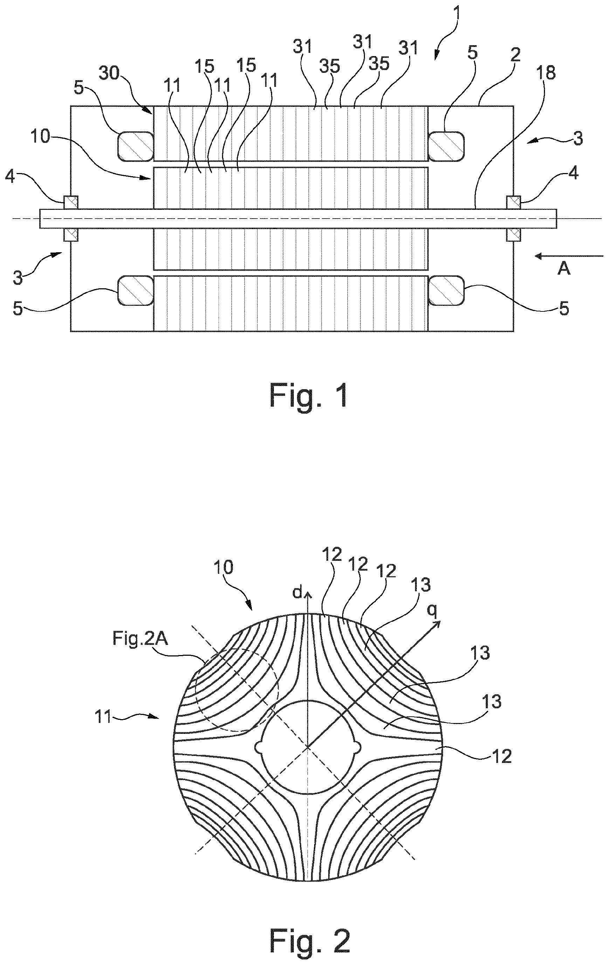

Fig. 1 zeigt eine schematisierte Schnittdarstellung einer Reluktanzmaschine 1. Diese weist ein Gehäuse 2 mit stirnseitigen Lagerschilden 3 auf, an denen über Lager 4 eine Welle 18 eines Läufers 10 drehbar gelagert ist. Der Läufer 10 ist somit um eine in einer axialen Richtung A verlaufenden Drehachse drehbar. Radial außenseitig ist der Läufer 10 von einem Ständer 30 umgeben, der stationär bezüglich des Gehäuses 2 angeordnet ist. Beiderseits des Ständers 30 sind hier stark schematisiert dargestellte Wickelköpfe 5 angeordnet, die über hier nicht dargestellte Verbindungen mit einer Stromquelle verbunden sind. Wie in der Figur angedeutet, weisen sowohl der Läufer 10 als auch der Ständer 30 eine Reihe von in axialer Richtung A aufeinander folgenden Leiterschichten 11, 31 auf, die wenigstens teilweise magnetflussleitend sind und denen elektrisch nichtleitende Isolationsschichten 15, 35 zwischengeordnet sind. Hierbei ist der Läufer 10 durch eine additive Fertigung hergestellt. Der Ständer 30 kann konventionell hergestellt sein, indem die Leiterschichten 31 aus Elektroblech gebildet werden und die Isolationsschichten 35 durch isolierende Lackschichten. Optional kann auch der Ständer 30 durch eine additive Fertigung hergestellt werden.

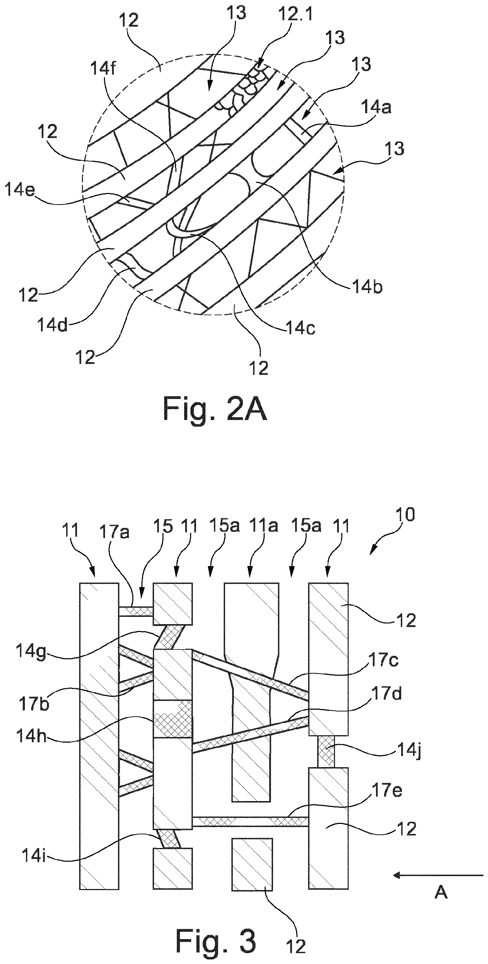

Fig. 2 zeigt eine Schnittdarstellung des Läufers 10 der Reluktanzmaschine 1 aus Fig. 1, wobei aus Gründen der Übersichtlichkeit die Welle 18 weggelassen wurde. Der Schnitt verläuft hierbei durch eine Leiterschicht 11, die einerseits magnetflussleitende Leiterbereiche 12 und andererseits diesen zwischengeordnete nicht-magnetflussleitende Isolationsbereiche 13 umfasst. Wie in der Figur erkennbar ist, berühren die Leiterbereiche 12 einander nicht, sondern sind durch die Isolationsbereiche 13 vollständig voneinander getrennt. Dies ist im Wesentlichen dadurch möglich, dass im Zuge eines additiven Fertigungsverfahrens die einzelnen Bereiche 12, 13 sukzessive aneinander aufgebaut werden können, wodurch es unnötig ist, flussleitende Stege zwischen benachbarten Leiterbereichen 12 vorzusehen. Stattdessen können dort Schicht-Isolierstege 14a-14f aus nicht-magnetflussleitendem Material vorgesehen sein, die beispielhaft in der vergrößerten Darstellung in Fig. 2A gezeigt sind. In der Figur sind die d-Achse, welche die generelle magnetische Vorzugsrichtung kennzeichnet, sowie die im 45°-Winkel hierzu verlaufende q-Achse eingezeichnet.

Fig. 2A stellt eine vergrößerte Detailansicht von Fig. 2 dar. Zum einen sind hierbei unterschiedliche Schicht-Isolierstege 14a-14f erkennbar, die jeweils innerhalb der Leiterschicht 11 verlaufen und zwei benachbarte Leiterbereiche 12 miteinander verbinden. Hierbei ist die vielfältige unterschiedliche Ausgestaltung der gezeigten Schicht-Isolierstege 14a-14f rein beispielhaft zu verstehen und dient dazu, verschiedene Optionen zu illustrieren. Normalerweise würden innerhalb eines Läufers 10 nicht derartig viele unterschiedliche Formen von Isolierstege miteinander kombiniert. Erkennbar ist bspw. ein einfacher Isoliersteg 14a, der quer zur Verlaufsrichtung der angrenzenden Leiterbereiche 12 verläuft und einen konstanten Querschnitt hat. Daneben ist ein weiterer Isoliersteg 14b gezeigt, der einen veränderlichen Querschnitt aufweist und sich zu den angrenzenden Leiterbereichen 12 hin verbreitert. Weiterhin ist ein X-förmiger Isoliersteg 14c gezeigt sowie ein S-förmig geschwungener Isoliersteg 14d. Auch zu erkennen sind im Wesentlichen gerade Isolierstege 14e, 14f, die allerdings schräg zur Verlaufsrichtung der Leiterbereiche 12 ausgerichtet sind. In einem der Leiterbereiche 12 sind eine Reihe von Ausnehmungen 12.1 gezeigt, die mit einem Ferrofluid gefüllt sind. Im Zuge eines Fertigungsprozesses können zunächst die Ausnehmungen 12.1 soweit aufgebaut werden, dass das Ferrofluid eingefüllt werden kann, und anschließend völlig verschlossen werden.

Fig. 3 zeigt eine Längsschnittdarstellung eines Teils des Läufers 10 aus Fig. 2, wobei die Schnittebene derjenigen in Fig. 1 entspricht und somit radial-axial verläuft. Zu erkennen sind wiederum vier Leiterschichten 11, 11a sowie dazwischen angeordnete Isolationsschichten 15, 15a. Auch hier sind - wie schon in Fig. 2A - zu rein illustrativen Zwecken sehr unterschiedliche Strukturen gezeigt. Zu erkennen sind zum einen mehrere Schicht-Isolierstege 14g - 14j sowie zum anderen mehrere Zwischen-Isolierstege 17a - 17e, die verschiedene Leiterschichten 11, 11a miteinander verbinden. Während ein Schicht-Isoliersteg 14h quer zur Erstreckungsrichtung der Leiterschichten 11, 11a die gleiche Ausdehnung aufweist wie die angrenzenden Leiterbereiche 12, die er verbindet, haben drei andere Isolierstege 14g, 14i, 14j eine geringere Ausdehnung. Zwei dieser Isolierstege 14g, 14i verlaufen zudem schräg zur Erstreckungsrichtung der Leiterschicht 11.

Bei den zwischen-Isolierstegen 17a - 17e handelt es sich zum einen um solche Isolierstege 17a, 17b, die sich jeweils nur von einer Leiterschicht 11 zur nächsten Leiterschicht 11 erstrecken, und zum anderen um Isolierstege 17c bis 17e, die sich darüber hinaus bis zur übernächsten Leiterschicht 11 erstrecken. Einige Isolierstege 17a, 17e verlaufen parallel zur axialen Richtung A, während andere Isolierstege 17b, 17c, 17d schräg zur axialen Richtung A verlaufen. Zwei der bis zur übernächsten Leiterschicht 11 durchgehenden Isolierstege 17c, 17d sind auch mit der dazwischenliegenden Leiterschicht 11 verbunden, während ein weiterer Isoliersteg 17e eine Ausnehmung der dazwischenliegenden Leiterschicht 11 durchquert und nicht mit dieser verbunden ist.

Eine Leiterschicht 11a weist in axialer Richtung eine abschnittsweise vergrößerte Ausdehnung auf, wodurch zwei angrenzende Isolationsschichten 15a abschnittsweise eine geringere axiale Ausdehnung aufweisen als die dritte dargestellte Isolationsschicht 15. Dies ist rein beispielhaft zu verstehen und es wäre bspw. auch möglich, dass die Leiterschicht 11a durchgehend eine größere oder aber eine kleinere axiale Ausdehnung aufweist als die anderen Leiterschichten 11.

Es ist offensichtlich, dass die hier gezeigten komplexen Strukturen sich zwar mit einem additiven Fertigungsverfahren erzeugen lassen, mit herkömmlichen Methoden, bspw. durch eine Schichtung von Elektroblechen, nicht bzw. nur schwer realisierbar sind. Bei der Herstellung der in Fig. 2A und 3 gezeigten Strukturen ist es bspw. möglich, wenigstens zwei unterschiedliche Vorrichtungen (z.B. Düsen oder Ähnliches) zu verwenden, wobei mit einer Vorrichtung die Leiterbereiche 12 aufgetragen werden und mit der anderen Vorrichtung die unterschiedlichen Isolierstege 14a-14i, 17a-17e. Eine Möglichkeit hierbei ist, dass nach und nach die einzelnen Leiterschichten 11, 11a und Isolationsschichten 15, 15a aufgebaut werden, wobei jeweils alternierend das magnetflussleitende Material der Leiterbereiche 12 und (soweit nötig) das nicht-magnetflussleitende Material der Isolierstege 14a-14i, 17a-17e aufgebracht wird.

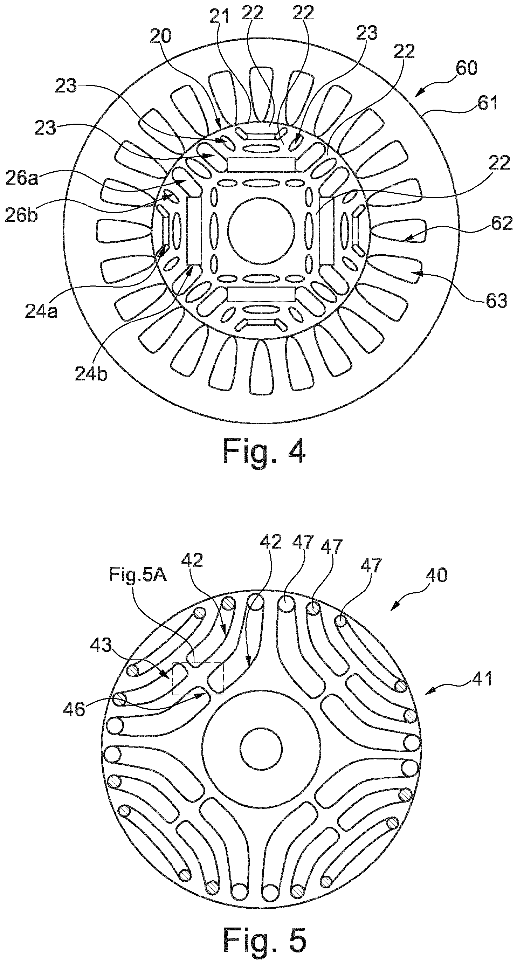

Fig. 4 zeigt eine Darstellung einer zweiten Ausführungsform eines Läufers 20 sowie eines Ständers 60. Gezeigt ist hierbei wiederum ein Schnitt quer zur axialen Richtung A mit einer Leiterschicht 61 des Ständers 60 sowie einer Leiterschicht 21 des Läufers 20. Die Leiterschicht 61 des Ständers weist eine Mehrzahl von umlaufend angeordneten Ausnehmungen 63 mit dazwischenliegenden Stegen 62 auf. Die Stege 62 sind hierbei aus magnetflussleitendem Material gebildet. Die Leiterschicht 61 kann ggf. aus gestanztem Blech bestehen oder sie kann in einem additiven Fertigungsverfahren hergestellt sein, wodurch sich ggf. feinere Strukturen realisieren lassen. Die Leiterschicht 21 des Läufers 20 umfasst verschiedene Leiterbereiche 22 sowie dazwischen angeordnete Isolationsbereiche 23. In einigen Isolationsbereichen 23 sind Schicht-Isolierstege 24a, 24b angeordnet, die im Zuge der additiven Fertigung aus einem nicht-magnetflussleitenden Material aufgebaut wurden. Daneben sind auch eine Reihe von dünnen Leiterstegen 26a, 26b erkennbar, die sich im additiven Fertigungsverfahren besonders dünn ausführen lassen.

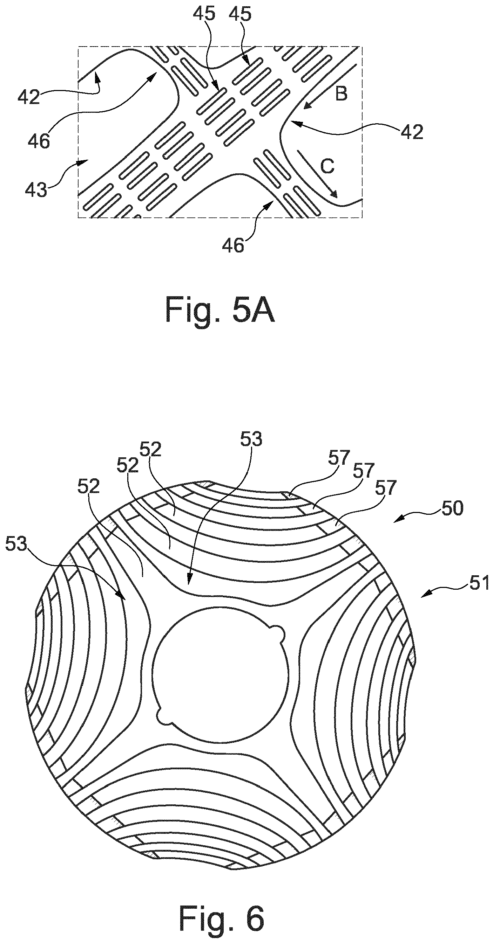

Fig. 5 zeigt eine dritte Ausführungsform eines Läufers 40, wobei wiederum nur eine Leiterschicht 41 dargestellt ist. Erkennbar sind auch hier wiederum Leiterbereiche 42 sowie zwischen geordnete Isolationsbereiche 43. Die Isolationsbereiche 43 können vollständig mit Luft gefüllt sein oder es können abschnittsweise Schicht-Isolierstege vorhanden sein, die hier allerdings nicht dargestellt sind. Darüber hinaus sind die Leiterbereiche 42 teilweise durch Leiterstege 46 verbunden, die sich quer zur Verlaufsrichtung der jeweiligen Leiterbereiche 42 erstrecken. Die Leiterbereiche 42 sowie die Leiterstege 46 wurden in einem additiven Fertigungsverfahren aus zwei unterschiedlichen magnetflussleitenden Materialien hergestellt. Wie in Fig. 5A, die eine vergrößerte Detailansicht von Fig. 5 repräsentiert, dargestellt ist, besteht bestehen sowohl die Leiterbereiche 42 als auch die Leiterstege überwiegend aus einem ersten magnetflussleitenden Material, in das allerdings Streifen 45 eines zweiten magnetflussleitenden Materials eingelagert sind. Die Streifen 45 sind länglich ausgebildet, wobei ihre Verlaufsrichtung B in den Leiterbereichen 42 im 90°-Winkel zur Verlaufsrichtung C in den Leiterstegen 46 verläuft. Alternativ können die Streifen 45 auch Ausnehmungen darstellen, die mit Luft gefüllt sind. In beiden Fällen kann durch das Vorhandensein der Streifen der Magnetfluss sowohl innerhalb der Leiterbereiche 42 als auch innerhalb der Leiterstege 46 gewissermaßen durch eine "Feinstruktur" beeinflusst werden. Alternativ oder zusätzlich wäre auch denkbar, dass wenigstens ein magnetisch anisotropes Material eingesetzt wird, dessen Vorzugsrichtung innerhalb der Leiterbereiche und innerhalb der Leiterstege unterschiedlich eingestellt ist.

Des Weiteren sind in einem radial außen liegenden Teil der Isolationsbereiche 43 Stäbe 47 eines Kurzschluss-Käfigs angeordnet. Diese können entweder auch im Zuge der additiven Fertigung aus einem geeigneten Material aufgebaut werden oder sie können vorpositioniert werden, während der Läufer 40 in additiver Fertigung um sie herum aufgebaut wird. Die Stäbe 47 sind allerdings optional und können bei dem gezeigten Läufer 40 auch weggelassen werden.

Fig. 6 zeigt eine vierte Ausführungsform eines Läufers 50, wobei auch hier wiederum eine Leiterschicht 51 dargestellt ist. Es handelt sich hier um eine Variante der Ausgestaltung aus Fig. 2 mit grundsätzlich entsprechend ausgebildeten Leiterbereichen 52 und Isolationsbereichen 53. Allerdings schließen sich radial außenseitig an die Leiterbereiche 52 Stäbe 57 eines Kurzschluss-Käfigs an, die hinsichtlich des Querschnitts an die Form der Leiterbereiche 52 angepasst sind. In diesem Fall ist es selbstverständlich vorteilhaft, die Stäbe 57 durch additive Fertigung zeitlich parallel zu den Leiterbereichen 52 und den Isolationsbereiche 53 aufzubauen.

## Patentansprüche

1. Läufer (10, 20, 40, 50) für eine Reluktanzmaschine (1), mit in axialer Richtung (A) abwechselnd angeordneten Leiterschichten (11, 11a, 21, 41, 51) und Isolationsschichten (15, 15a), wobei die Leiterschichten (11, 11a, 21, 41, 51) magnetflussleitende Leiterbereiche (12, 22, 42, 52) aufweisen und die Isolationsschichten (15, 15a) elektrisch isolierend sind, wobei wenigstens eine Leiterschicht (11, 11a, 21, 41, 51) wenigstens einen nicht-magnetflussleitenden Isolationsbereich (13, 23, 43, 53) aufweist, der wenigstens teilweise zwischen Leiterbereichen (12, 22, 42, 52) angeordnet ist, **dadurch gekennzeichnet, dass** der Läufer (10, 20, 40, 50) wenigstens teilweise durch additive Fertigung hergestellt ist, wobei wenigstens ein Isolationsbereich (13, 23, 43, 53) einen durch additive Fertigung hergestellten Schicht-Isoliersteg (14a-14i, 24a, 24b) aus nicht-magnetflussleitendem Material aufweist, der zwei Leiterbereiche (12, 22, 42, 52) verbindet.

2. Läufer nach Anspruch 1,
**dadurch gekennzeichnet, dass** wenigstens zwei Leiterbereiche (12, 22, 42, 52) durch einen dazwischen liegenden Isolationsbereich (13, 23, 43, 53) vollständig getrennt sind.

3. Läufer nach einem der vorherigen Ansprüche,
**dadurch gekennzeichnet, dass** die Leiterschichten (11, 11a, 21, 41, 51) und/oder Isolationsschichten (15, 15a) eine wenigstens abschnittsweise unterschiedliche axiale Ausdehnung aufweisen.

4. Läufer nach einem der vorherigen Ansprüche,
**dadurch gekennzeichnet, dass** wenigstens eine Isolationsschicht (15, 15a) wenigstens einen durch additive Fertigung hergestellten Zwischen-Isoliersteg (17a - 17e) aus elektrisch isolierendem Material aufweist, der zwei Leiterschichten (11, 11a, 21, 41, 51) verbindet.

5. Läufer nach Anspruch 4,
**dadurch gekennzeichnet, dass** sich ein Zwischen-Isoliersteg (17a - 17e) von einer Leiterschicht (11, 11a, 21, 41, 51) wenigstens bis zur übernächsten Leiterschicht (11, 21, 41, 51) erstreckt.

6. Läufer nach einem der vorherigen Ansprüche,
**dadurch gekennzeichnet, dass** dieser wenigstens zwei unterschiedliche magnetflussleitende Materialien umfasst.

7. Läufer nach einem der vorherigen Ansprüche,
**dadurch gekennzeichnet, dass** wenigstens eine Leiterschicht (11, 11a, 21, 41, 51) ein magnetisch anisotropes Material umfasst.

8. Herstellungsverfahren für einen Läufer (10, 20, 40, 50) für eine Reluktanzmaschine (1), mit in axialer Richtung (A) abwechselnd angeordneten Leiterschichten (11, 11a, 21, 41, 51) und Isolationsschichten (15, 15a), wobei die Leiterschichten (11, 11a, 21, 41, 51) magnetflussleitende Leiterbereiche (12, 22, 42, 52) aufweisen und die Isolationsschichten (15, 15a) elektrisch isolierend sind, wobei wenigstens eine Leiterschicht (11, 11a, 21, 41, 51) wenigstens einen nicht-magnetflussleitenden Isolationsbereich (13, 23, 43, 53) aufweist, der wenigstens teilweise zwischen Leiterbereichen (12, 22, 42, 52) angeordnet ist,
**dadurch gekennzeichnet, dass** der Läufer (10, 20, 40, 50) wenigstens teilweise durch additive Fertigung hergestellt wird, wobei wenigstens ein Isolationsbereich (13, 23, 43, 53) einen durch additive Fertigung hergestellten Schicht-Isoliersteg (14a-14i, 24a, 24b) aus nicht-magnetflussleitendem Material aufweist, der zwei Leiterbereiche (12, 22, 42, 52) verbindet.

9. Herstellungsverfahren nach Anspruch 8,
**dadurch gekennzeichnet, dass** der Läufer (10, 20, 40, 50) in einem axial-schichtweisen Aufbau gefertigt wird, wobei Leiterschichten (11, 11a, 21, 41, 51) und Isolationsschichten (15, 15a) senkrecht zur Läuferachse gebildet werden, wobei sich Schichten mit flussführenden Bereichen mit flusssperrenden Bereichen abwechseln.

10. Herstellungsverfahren nach Anspruch 9 oder 10,
**dadurch gekennzeichnet, dass** der Läufer (10, 20, 40, 50) in einem radialen Aufbau gefertigt wird, wobei Flussführungen und Flusssperren parallel zur Läuferachse gebildet werden, wobei, wobei sich Schichten mit flussführenden Bereichen mit flusssperrenden Bereichen abwechseln.

11. Herstellungsverfahren nach einem der vorherigen Ansprüche 9 bis 10,
**dadurch gekennzeichnet, dass** die Welle (18) wenigstens teilweise durch additive Fertigung hergestellt wird.

## Claims

1. Rotor (10, 20, 40, 50) for a reluctance machine (1), comprising conductor layers (11, 11a, 21, 41, 51) and insulation layers (15, 15a) arranged in alternation in the axial direction (A), wherein the conductor layers (11, 11a, 21, 41, 51) have magnetic-flux-conducting conductor regions (12, 22, 42, 52) and the insulation layers (15, 15a) are electrically insulating, wherein at least one conductor layer (11, 11a, 21, 41, 51) has at least one non-magnetic-flux-conducting insulation region (13, 23, 43, 53) which is arranged at least partially between conductor regions (12, 22, 42, 52), **characterised in that** the rotor (10, 20, 40, 50) is produced at least partially by additive manufacturing, wherein at least one insulation region (13, 23, 43, 53) has an in-layer insulating rib (14a-14i, 24a, 24b) which is made from non-magnetic-flux-conducting material by means of additive manufacturing and which connects two conductor regions (12, 22, 42, 52) .

2. Rotor according to claim 1,
**characterised in that** at least two conductor regions (12, 22, 42, 52) are completely separated by an insulation region (13, 23, 43, 53) which is situated between them.

3. Rotor according to one of the preceding claims,
**characterised in that** the conductor layers (11, 11a, 21, 41, 51) and/or insulation layers (15, 15a) have an axial spread which differs at least sectionally.

4. Rotor according to one of the preceding claims,
**characterised in that** at least one insulation layer (15, 15a) has at least one intermediate insulating rib (17a-17e) which is made from electrically insulating material by means of additive manufacturing and connects two conductor layers (11, 11a, 21, 41, 51).

5. Rotor according to claim 4,
**characterised in that** an intermediate insulating rib (17a-17e) extends from one conductor layer (11, 11a, 21, 41, 51) at least to the next conductor layer (11, 21, 41, 51) but one.

6. Rotor according to one of the preceding claims,
**characterised in that** it comprises at least two different magnetic-flux-conducting materials.

7. Rotor according to one of the preceding claims,
**characterised in that** at least one conductor layer (11, 11a, 21, 41, 51) comprises a magnetically anisotropic material.

8. Production method for a rotor (10, 20, 40, 50) for a reluctance machine (1), comprising conductor layers (11, 11a, 21, 41, 51) and insulation layers (15, 15a) arranged in alternation in the axial direction (A), wherein the conductor layers (11, 11a, 21, 41, 51) have magnetic-flux-conducting conductor regions (12, 22, 42, 52) and the insulation layers (15, 15a) are electrically insulating, wherein at least one conductor layer (11, 11a, 21, 41, 51) has at least one non-magnetic-flux-conducting insulation region (13, 23, 43, 53) which is arranged at least partially between conductor regions (12, 22, 42, 52),
**characterised in that** the rotor (10, 20, 40, 50) is produced at least partially by additive manufacturing, wherein at least one insulation region (13, 23, 43, 53) has an in-layer insulating rib (14a-14i, 24a, 24b) which is made from non-magnetic-flux-conducting material by means of additive manufacturing and connects two conductor regions (12, 22, 42, 52) .

9. Production method according to claim 8,
**characterised in that** the rotor (10, 20, 40, 50) is so manufactured as to be built up layer by layer axially, wherein conductor layers (11, 11a, 21, 41, 51) and insulation layers (15, 15a) are formed perpendicularly relative to the rotor axis, wherein with having flux-guiding regions alternate with flux-inhibiting regions.

10. Production method according to claim 9 or 10,
**characterised in that** the rotor (10, 20, 40, 50) is so manufactured as to be built up radially, wherein flux guides and flux inhibitors are formed parallel to the rotor axis, wherein layers with flux-guiding regions alternate with flux-inhibiting regions.

11. Production method according to one of the preceding claims 9 to 10,
**characterised in that** the shaft (18) is produced at least partially by means of additive manufacturing.

## Revendications

1. Rotor (10, 20, 40, 50) d'une machine (1) à réluctance, comprenant des couches (11, 11a, 21, 41, 51) conductrices et des couches (15, 15a) isolantes, disposées en alternance dans une direction (A) axiale, les couches (11, 11a, 21, 41, 51) conductrices ayant des parties (12, 22, 42, 52) conductrices conduisant le flux magnétique et les couches (15, 15a) isolantes étant isolantes électriquement, dans lequel au moins une couche (11, 11a, 21, 41, 51) conductrice a au moins une partie (13, 23, 43, 53) isolante ne conduisant pas le flux magnétique, qui est disposée, au moins en partie, entre des parties (12, 22, 42, 52) conductrices,
**caractérisé en ce que** le rotor (10, 20, 40, 50) est fabriqué, au moins en partie par fabrication additive,
dans lequel au moins une partie (13, 23, 43, 53) isolante a une entretoise (14a-14i, 24a, 24b) isolante de couche, fabriquée par fabrication additive, en matériau ne conduisant pas le flux magnétique, qui relie deux parties (12, 22, 42, 52) conductrices.

2. Rotor suivant la revendication 1,
**caractérisé en ce qu'**au moins deux parties (12, 22, 42, 52) conductrices sont séparées complètement par une partie (13, 23, 43, 53) isolante interposée entre elles.

3. Rotor suivant l'une des revendications précédentes,
**caractérisé en ce que** les couches (11, 11a, 21, 41, 51) conductrices et/ou les couches (15, 15a) isolantes ont une étendue axiale différente, au moins par endroit.

4. Rotor suivant l'une des revendications précédentes,
**caractérisé en ce qu'**au moins une couche (15, 15a) isolante a au moins une entretoise (17a-17e) isolante intermédiaire fabriquée par fabrication additive, en matériau isolant électriquement, qui relie deux couches (11, 11a, 21, 41, 51) conductrices.

5. Rotor suivant la revendication 4,
**caractérisé en ce qu'**une entretoise (17a-17e) isolante intermédiaire s'étend d'une couche (11, 11a, 21, 41, 51) conductrice au moins jusqu'à la couche (11, 21, 41, 51) conductrice au-delà de la suivante.

6. Rotor suivant l'une des revendications précédentes,
**caractérisé en ce que** celui-ci comprend au moins deux matériaux différents conduisant le flux magnétique.

7. Rotor suivant l'une des revendications précédentes,
**caractérisé en ce qu'**au moins une couche (11, 11a, 21, 41, 51) conductrice comprend un matériau anisotrope magnétiquement.

8. Procédé de fabrication d'un rotor (10, 20, 40, 50) d'une machine (1) à réluctance comprenant des couches (11, 11a, 21, 41, 51) conductrices et des couches (15, 15a) isolantes, disposées en alternance dans une direction (A) axiale, les couches (11, 11a, 21, 41, 51) conductrices ayant des parties (12, 22, 42, 52) conductrices conduisant le flux magnétique et les couches (15, 15a) isolantes étant isolantes électriquement, dans lequel au moins une couche (11, 11a, 21, 41, 51) conductrice a au moins une partie (13, 23, 43, 53) isolante ne conduisant pas le flux magnétique, qui est disposée, au moins en partie, entre des parties (12, 22, 42, 52) conductrices,
**caractérisé en ce que** l'on fabrique le rotor (10, 20, 40, 50), au moins en partie, par fabrication additive, au moins une partie (13, 23, 43, 53) isolante ayant une entretoise (14a-14i, 24a, 24b) isolante de couche fabriquée par fabrication additive, en matériau non conducteur du flux magnétique, qui relie deux parties (12, 22, 42, 52) conductrices.

9. Procédé de fabrication suivant la revendication 8,
**caractérisé en ce que** l'on fabrique le rotor (10, 20, 40, 50) suivant une structure couche par couche axialement, les couches (11, 11a, 21, 41, 51) conductrices et les couches (15, 15a) isolantes étant formées perpendiculairement à l'axe du rotor, des couches ayant des parties conduisant le flux alternant avec des parties bloquant le flux.

10. Procédé de fabrication suivant la revendication 9 ou 10,
**caractérisé en ce que** l'on fabrique le rotor (10, 20, 40, 50) suivant une structure radiale, des guidages de flux et des blocages de flux étant formés parallèlement à l'axe du rotor, des couches ayant des parties conduisant le flux alternant avec des parties bloquant le flux.

11. Procédé de fabrication suivant l'une des revendications 9 à 10 précédentes,
**caractérisé en ce que** l'on fabrique l'arbre (18), au moins en partie, par fabrication additive.
